Europäisches Patentamt

European Patent Office

Office européen des brevets

(19)

(11) Publication number: **0 230 145**
A2

(12) # EUROPEAN PATENT APPLICATION

(21) Application number: **86310191.1**

(22) Date of filing: **29.12.86**

(51) Int. Cl.⁴: **C 08 L  63/00**, C 08 K  3/40,
C 08 K  7/14, C 08 K  5/54,
C 08 K  3/00, C 09 D  3/58,
B 05 D  7/16

(30) Priority: **10.01.86  JP 4035/86**

(43) Date of publication of application: **29.07.87**
**Bulletin 87/31**

(84) Designated Contracting States: **BE DE FR GB IT NL**

(71) Applicant: **NITTO ELECTRIC INDUSTRIAL CO., LTD.,**
**No. 1-2, Shimohozumi 1-chome Ibaraki-shi, Osaka (JP)**

(72) Inventor: **Tajiri, Kazuhiro Nitto Electric Industrial**
**Co.,Ltd, 1-2, Shimohozumi 1-chome, Ibaraki-shi Osaka**
**(JP)**
Inventor: **Kohmoto, Michio Nitto Electric Industrial**
**Co.,Ltd, 1-2, Shimohozumi 1-chome, Ibaraki-shi Osaka**
**(JP)**
Inventor: **Nakatsuka, Hiroshi Nitto Electric Industrial**
**Co.,L, 1-2, Shimohozumi 1-chome, Ibaraki-shi Osaka**
**(JP)**

(74) Representative: **Diamond, Bryan Clive et al, Gee & Co.**
**Chancery House Chancery Lane, London WC2A 1QU**
**(GB)**

(54) **Epoxy resin powder coating composition and steel coated therewith.**

(57) A powder coating composition comprises by weight (1) 100 parts of an epoxy resin (e.g. bisphenol A type),
(2) a hardener (e.g. an aromatic diamine),
(3) as filler (i) 30–180 parts of needle-like glass powder of average length at least 40 μm, preferably 50–350 μm, ratio of length: diameter at least 4:1, preferably 5:1 to 100:1, and average diameter 1–30 μm, preferably surface treated with a silane coupling agent and (ii) 30–150 parts of a granular inorganic filler (e.g. $TiO_2$, $BaSO_3$) of average diameter 1.0 μm or less and preferably surface treated to increase its weltability; and
(4) 0.1–5.0 parts of an aminosilane, epoxysilane or mercaptosilane as coupling agent. The composition can be made by melt mixing and powdering.
A steel member, e.g. for a vehicle, is treated with a solution of phosphate, chromate or chromium/phosphoric acid to form a surface layer on which is deposited the powder which is heated to form a hardened coating having high impact resistance at ordinary and low temperature and forming an excellent protection against corrosion of the steel.

- 1 -

EPOXY RESIN POWDER COATING COMPOSITION

AND STEEL COATED THEREWITH

The present invention relates to an epoxy resin powder coating composition and a coated steel member. More particularly, it is concerned with an epoxy resin powder coating composition which can form a coating having an excellent impact resistance not only at room temperature but also at low temperatures, and also excellent anticorrosion properties, and to coated steel members having formed thereon a coating of the composition.

An epoxy resin powder coating composition usually comprises an epoxy resin with a hardener and a granular inorganic filler compounded thereto. This coating composition has been widely used as an anticorrosive paint for ships, vehicles, large-sized structures, and so forth because it exhibits excellent adhesion to members to be coated and also excellent anticorrosion properties.

The epoxy resin coating composition, however, has a disadvantage in that although a coating formed using the coating composition generally exhibits good impact resistance at room temperature, its impact resistance at low temperatures is unsatisfactorily low. In order to overcome the above defect, several methods have been proposed: a method in which the thickness of the coating is increased, a method in which the amount of the granular inorganic filler is increased, and a method in which a flaky inorganic filler is used in place of the granular inorganic filler.

The above methods, however, undesirably lower the flexibility of the coating and also the anticorrosion properties thereof. If the coating has a poor flexibility, cracks tend to develop therein during handling of coated members.

As a result of extensive investigations to provide an epoxy resin coating composition which can form a coating having good flexibility and also exhibiting excellent impact resistance not only at room temperature but also at low temperatures, and also having excellent anticorrosion properties, it has been found that the object can be attained by employing specified amounts of a granular inorganic filler, a specific needle-like glass powder as filler and a specific silane coupling agent as an additive, which are compounded with an epoxy resin.

Accordingly, the present invention provides an epoxy resin coating composition comprising an epoxy resin with at least a hardener, a filler and an additive compounded thereto, wherein the filler is a mixture

- 3 -

of from 30 to 180 parts by weight per 100 parts by weight of the epoxy resin of a needle-like glass powder having an average length of at least 40 μm and an aspect ratio of at least 4, and at least 30 parts by weight per 100 parts by weight of the epoxy resin of a granular inorganic filler having an average particle diameter of 1.0 μm or less, and the additive is 0.1 to 5.0 parts by weight per 100 parts by weight of the epoxy resin of at least one silane coupling agent selected from aminosilanes, epoxysilanes and mercaptosilanes.

The present invention also provides a coated steel member comprising a steel member, a chemically treated layer formed on the surface of the steel member and a coating of the epoxy resin powder coating composition described above formed on the chemically treated layer.

It is known that needle-like glass powder is a filler having a high reinforcing effect. When, however, the needle-like glass powder is used as a filler for an epoxy resin coating composition, a coating formed using the resulting composition is markedly decreased in flexibility. For this reason, in the preparation of conventional epoxy resin coating composition, such a needle-like glass powder has been rarely compounded.

- 4 -

According to the present invention, however, it has been found that if a mixture of the needle-like glass powder and granular inorganic filler is used as a filler for the epoxy resin powder coating composition and, furthermore, those are added in the specified amounts, the resulting epoxy resin powder coating composition can provide a coating having good flexibility and further exhibiting excellent impact resistance not only at room temperature but also at low temperatures. Further, use of the specific silane coupling agent such as aminosilane as the additive prevents deterioration of the anticorrosion properties of the coating, which causes when a large amount of the above-described fillers is compounded.

Epoxy resins which can be used in the present invention are glycidyl ether-type epoxy resins such as bisphenol A-type epoxy resins and novolak-type epoxy resins. Bisphenol A-type epoxy resins are particularly preferred. When these bisphenol A-type epoxy resins are used, suitable amounts of other epoxy resins such as bisphenol F-type epoxy resins can be used in combination therewith to increase the heat resistance and the like of the coating composition. In this case, it is preferred that the amount of the bisphenol A-type epoxy resin used is at least 70% by weight based on the total weight of all the epoxy resins used.

The epoxy resins having a molecular weight of from 900 to 3,600 and an epoxy equivalent of from 450 to 1,800 are generally preferably used in the present invention. If the epoxy equivalent is too small, the resulting epoxy resin powder coating composition tends to cause blocking and the coating workability is undesirably reduced. On the other hand, if the epoxy equivalent is too large, the melt viscosity of the coating composition is excessively increased and a uniform coating cannot be obtained.

The preferred epoxy resins are those wherein the ratio of the number of unreactive terminal groups, i.e., terminal groups other than the epoxy group (e.g., glycol and chlorohydrin resulting from ring opening of the epoxy group) to the total number of groups is less than 5:100. If this ratio is too large, the flexibility and impact resistance of the coating are adversely influenced.

The hardener which can be used in the present invention is appropriately selected from hardeners which are commonly used in the conventional epoxy resin powder coating composition. Examples of such hardeners are amine-based hardeners such as aromatic diamines (e.g., diaminodiphenylamine), aliphatic amine/aliphatic dicarboxylic acid condensates, dicyandiamide, and imidazoles; organic acid anhydride-based hardeners such as tetrahydrophthalic anhydride, benzophenonetetracarboxylic anhydride, and trimellitic anhydride; and phenol-based hardeners such as a phenol resin and bisphenol A. The hardener is generally used in an amount of from 0.5 to 1.5 equivalents per epoxy equivalent of the epoxy resin.

The silane coupling agent used as an additive in the powder coating composition of the present invention is at least one member selected from the aminosilanes, epoxysilanes and mercaptosilanes. Those compounds have a high reactivity to the epoxy resin, so that the wettability between the filler or the steel member surface which is a coated member and the epoxy resin is increased, thereby increasing the adhesiveness therebetween. This makes it possible to prevent penetration of water in the interface between the filler and the epoxy resin and also penetration of water in the interface between the steel member surface and the coating. As a result, the corrosion of a coated member due to the swelling of the coating caused by the penetration of water and also due to the reduction in the insulating properties of the coating can be sufficiently prevented.

The amount of the silane coupling agent added is 0.1 to 5.0 parts by weight, preferably 0.2 to 3.0 parts by weight, per 100 parts by weight of the epoxy resin. If the amount of the silane coupling agent is too large, foaming of the coating during coating operation and reduction in strength of the coating occur. On the other hand, if the amount thereof is too small, the above-described effects cannot sufficiently be exhibited.

The silane coupling agent used in the present invention is at least one member selected from the group consisting of an aminosilane, an epoxy silane and a mercaptosilane.

Examples of the aminosilane include N-phenyl-$\gamma$-aminopropyltrimethoxysilane, n-$\beta$-(aminoethyl)-$\gamma$-aminopropyltrimethoxysilane, $\gamma$-aminopropyltriethoxysilane.

Examples of the epoxysilane include $\gamma$-glycidoxypropylmethyldiethoxysilane and $\beta$-(3,4-epoxycyclohexyl)ethyltrimethoxysilane.

An example of the mercaptosilane is $\gamma$-mercaptopropyltrimethoxysilane.

The filler which is added to the coating composition of the present invention comprises a specified needle-like glass powder and a specified granular inorganic filler.

The needle-like glass powder has an average length of at least 40 μm, preferably at least 50 μm, and particularly preferably from 50 to 350 μm, an aspect ratio (average length/average diameter) of at least 4:1, preferably at least 5:1, and particularly preferably from 5:1 to 100:1, and an average diameter of from 1 to 30 μm.

If the average length of the needle-like glass powder is less than 40 μm, or the aspect ratio is less than 4:1, the resulting coating composition can provide only a coating having poor impact resistance particularly at low temperatures (0°C or less). On the other hand, if the average length is too large, it becomes sometimes difficult to prepare a powder coating composition and the smoothness of the coating is undesirably reduced.

The needle-like glass powder used in the present invention is a rod-shaped piece, the diameter of which is substantially constant (within the tolerance of about ±10%) along the whole lengthwise direction thereof. Such a needle-like glass powder can be obtained by pulverizing conventional glass fibers. Of course, needle-like glass powders having forms other than the rod-like form can be used so long as their aspect ratio (long axis/short axis) and so forth are within the above-specified ranges.

The term "aspect ratio" is the recognized term in the sense of a shape coefficient of an article, and the term is used in the present invention to indicate the shape of a particle. That is, the aspect ratio is used to indicate the long axis/short axis ratio of the particle. For example, in the case of rod-shaped particles, the aspect ratio indicates (length of the rod/diameter of the rod) ratio. In the case of particles having a form other than the rod-like form, the aspect ratio indicates (maximum length/maximum length in a direction at right angles to the maximum length) ratio.

The above aspect ratio is generally determined by a method in which the images of particles are obtained by, for example, a microscopic photograph, and the long axis/short axis ratio is measured. In this case, it is preferred that the average value of at least 500 particles be employed.

It is preferred to use a needle-like glass powder the surface of which has been treated with a silane coupling agent. It is also preferred that the type of the silane coupling agent used to treat the surface of the needle-like glass powder is the same as that compounded to the epoxy resin.

By compounding the specific silane coupling agent as the additive to the epoxy resin and using the needle-like glass powder the surface of which has been treated with the same silane coupling agent, the corrosion preventing effect of the steel member to be coated becomes more complete.

The amount of the needle-like glass powder used is from 30 to 180 parts by weight, preferably from 50 to 160 parts by weight, and particularly preferably from 60 to 150 parts by weight, per 100 parts by weight of the

0230145

- 10 -

epoxy resin. If the amount of the needle-like glass powder used is less than 30 parts by weight, the resulting powder coating composition can provide only a coating having poor impact resistance particularly at low temperatures. On the other hand, if the amount thereof is more than 180 parts by weight, the smoothness and flexibility of the coating are reduced.

The granular inorganic filler which is used in combination with the needle-like glass powder has an average particle diameter of 1.0 μm or less and preferably from _ _ 0.1 to 0.7 μm. If the average particle diameter is more than 1.0 μm, the coating formed has a poor flexibility. It is preferred that the aspect ratio as defined before be 2:1 or less.

Examples of the granular inorganic filler are titanium dioxide, barium sulfate, fused silica, alumina and calcium carbonate, each having an average particle diameter of 1.0 μm or less and an aspect ratio of 2:1 or less.

It is preferred for the granular inorganic filler to be subjected to  a  surface treatment to increase its wetting properties to the epoxy resin. The particularly preferred surface treatment is a Zn-Al-Si treatment. In addition, surface treatments using Al alone, or together with a resin acid, a fatty acid, a silane coupling agent, and/or a titanium coupling agent can be employed depending on the type of the filler.

The above Zn-Al-Si treatment comprises coating the hydrates of silicic acid, aluminum oxide and zinc oxide on the surface of the filler, thereby improving the affinity of the epoxy resin to the filler and the hydrophilic properties of the filler.

This surface treatment increases the adhesion between the granular inorganic filler and the epoxy resin in the coating and, therefore, as in the case of the surface treatment of the needle-like glass powder, can increase the anticorrosion and insulation properties of the coating.

The amount of the granular inorganic filler used is at least 30 parts by weight, preferably from 30 to 150 parts by weight, and particularly preferably from 40 to 140 parts by weight, per 100 parts by weight of the epoxy resin. If the amount of the granular inorganic filler used is less than 30 parts by weight, the resulting epoxy resin powder coating composition can provide only a coating having a poor flexibility. On the other hand, if the amount thereof is too large, the smoothness of the coating is reduced.

The epoxy resin powder coating composition of the present invention comprises the above-described epoxy resin, hardener, needle-like glass powder, granular inorganic filler and silane coupling agent as

essential constituents. In addition to these constituents, the composition may further contain, if desired and necessary, additives such as pigment, a leveling agent, a hardening accelerator, a flow-adjusting agent and an anticorrosive agent. The amount of the additive used is usually 5 parts by weight or less per 100 parts by weight of the epoxy resin.

The epoxy resin powder coating composition according to the present invention can be prepared by either a melt mixing method or a dry mixing method. It is preferred to employ the melt mixing method. This melt mixing method includes a step where the constituents are melt mixed and then pulverized to a predetermined particle size. At this pulverization step, therefore, the size of the filler, i.e., the average length and aspect ratio of the needle-like glass powder or the average particle diameter of the granular inorganic filler, may change during pulverization.

In preparing the powder coating composition of the present invention, the following procedure is preferably employed particularly when it is desired to more increase the flexibility of the hardened coating.

At least 80 wt% of the needle-like glass powder + granular inorganic filler and at least 50 wt%, preferably at least 80 wt%, of the epoxy resin are preliminarily melt

0230145

- 13 -

mixed and pulverized to form a powder and, thereafter, the resulting powder and the remainder are melt mixed and pulverized to form the desired powder coating composition.

This method is particularly effective when the needle-like glass powder is used in an amount of at least 100 parts by weight per 100 parts by weight of the epoxy resin.

It is important in the present invention that the size of the filler after pulverization falls within the above-specified range, and the above effects of the present invention can be obtained even using needle-like glass powders and granular inorganic fillers which do not satisfy the above-specified size requirements so long as the size of the filler after pulverization can satisfy the requirements. For example, under the conditions of preparation of the powder coating composition shown in the example as described hereinafter, the average length of the needle-like glass powder after pulverization changed to 90 to 95% of the length before compounding, whereas the average diameter of the needle-like glass powder and the average particle diameter of the granular inorganic filler remained unchanged.

The particle size of the epoxy resin powder coating composition of the present invention prepared by either the melt mixing method or the dry mixing method varies depending on the purpose of use of the powder coating composition. The maximum particle size thereof is generally from about 200 to 40 mesh.

The epoxy resin powder coating composition of the present invention can be coated by conventional coating techniques such as an electrostatic spray method, an electrostatic dipping method, and a fluid dipping method. When coated, the composition adheres to a member to be coated and hardens, thereby forming a coating. The thickness of the coating is determined depending on the purpose of use of the final coated member. If the thickness is too small, defects tend to develop in the coating. On the other hand, if the thickness is too large, the flexibility drops. Therefore, the thickness of the coating is usually within the range of from about 0.1 to 1.0 mm.

The coating thus formed has an excellent impact resistance, of course, at room temperature and also at temperatures as low as about -50°C, and further exhibits a good flexibility.

The epoxy resin powder coating composition of the present invention can provide a coating having the above-described excellent characteristics, and is therefore very useful as a powder coating composition for anticorrosive coating of ships, vehicles, large-sized structures, and the like, and also for decoration, anticorrosive coating, electrical insulation, or fixation of electric appliances and the like.

When the powder coating composition of the present invention is coated on the surface of a steel member, for example, by coating techniques as described above and then hardened by heating, a protective coating exhibiting good adhesion to the steel surface and also excellent impact resistance and flexibility is formed.

The main use of the powder coating composition of the present invention is a protective coating of a steel member. The present invention thus includes a steel member with a coating as described above, i.e., a coated steel member. This coated steel member will hereinafter be explained in detail.

In producing the coated steel member, the powder coating composition may be coated directly on the surface of the steel member. It is preferred, however, that the steel surface be subjected to chemical treatment using a phosphate solution, a chromate solution, or a chromium/ phosphoric acid solution to thereby form a layer (hereinafter referred to as a "chemically treated layer") and, thereafter, the powder coating composition be coated to form a coating on the chemically treated layer. The coating of the powder coating composition provided on the steel surface through the chemically treated layer exhibits more increased impact resistance over a wide temperature range of from low temperature to high temperature and also excellent flexibility as a result of the synergistic effect of the two layers. Furthermore, the inherent advantages of the chemically treated layer are not reduced.

In the production of the coated steel member of the present invention, the chemically treated layer is first formed. Prior to the formation of the chemically treated layer, the steel surface is subjected to preliminary treatment. This preliminary surface treatment roughens the surface of the steel member. This roughening is usually carried out by suitable techniques such as shot blasting and sand blasting so that the surface roughness (the maximum roughness as determined by JIS B0601) is from 10 to 120 µm, preferably the surface roughness is within the above-specified range and is 1/4 or less of the thickness of the coating of the powder coating composition. If the maximum roughness is less than 10 µm, the anchor effect becomes insufficiently, and the adhesion force of the coating drops. This also leads to reduction in the impact resistance of the coating. On the other hand, if the maximum roughness is more than 120 µm, cracks tend to develop in the coating when an impact is applied thereon. In particular, when the thickness of the coating is too small, e.g., less than 300 µm, this tendency becomes marked, and the impact resistance is decreased.

The chemically treated layer is a layer formed on the steel surface by treating it with a phosphate solution, a chromate solution, or a chromium/phosphoric acid solution. Either a single layer or two or more layers are formed, these treating solutions are known in the art, and solutions conventionally used can be used as they are. The chemical treatment can be carried out by conventional techniques. The solutions are described in detail below.

(a)     Phosphate Solution

The phosphate solution is an aqueous solution composed mainly of phosphoric acid, phosphate and an oxidizing agent such as nitric acid, which may further contain, depending on the purpose, heavy metals (e.g., Fe, Ni, Co, Ca, Mg, and Cu), anions (e.g., $BO_3$, F, $SiF_6$, $BF_4$, $ClO_3$, and $P_3O_{10}$), and organic acids (e.g., oxalic acid, tartaric acid), citric acid, glyceric acid, tannic acid, and ascorbic acid). When the phosphate solution is coated on the steel member by techniques such as dipping, spraying, and coating, a phosphate layer is formed, which contains as a major component the following compounds.

(1)     Iron phosphate-based layer

$FePO_4 \cdot 2H_2O$ and $\gamma-Fe_2O_3$

(2)     Zinc phosphate-based layer

$Zn_3(PO_4)_2 \cdot 4H_2O$, and $ZnFe_2(PO_4)_2 \cdot 4H_2O$

(3)     Manganese phosphate-based layer

$Mn(PO_4)_2 \cdot 3H_2O$, and $2MnHPO_4 \cdot 5/2H_2O \cdot FeHPO_4$

(4)     Calcium phosphate-based layer

$CaHPO_4 \cdot 2H_2O$, and $CaHPO_4$

(5)     Zinc/calcium phosphate-based layer

$Zn_2FE(PO_4)_2 \cdot 4H_2O$, $Zn_2Ca(PO_4)_2 \cdot 2H_2O$, and

$Zn_3(PO_4)_2 \cdot 4H_2O$

(6)     Alkali phosphate-based layer

$Fe_3(PO_4)_2 \cdot 8H_2O$

(7)     Alkali phosphate + $Fe^{++}$ + $H_3PO_4$-based layer

$Fe_5H_2(PO_4)_4 \cdot 4H_2O$

(b)     Chromate Solution

The chromate solution is essentially an aqueous solution containing $Cr^{6+}$ (e.g., $CrO_3$ and $Na_2Cr_2O_7$) as a major component and an anion (e.g., $SO_4$, $SiF_6$, Cl, $NO_3$, and F) as a layer-forming accelerator, which may further contain a pH controller, a water-soluble resin, and so forth, depending on the purpose. It is believed that the layer formed on the steel member by coating, dipping, electrolysis, and so forth is composed mainly of $xCrO_3 \cdot yCr_2O_3 \cdot zH_2O$ and further contains other additives.

(c)     Chromium/Phosphoric Acid Solution Containing $Cr^{6+}$ and Phosphoric Acid

This solution is a solution prepared by adding the soluble salts of heavy metals such as Zn and Ni to an

- 19 -

aqueous solution containing $Cr^{6+}$ and phosphoric acid. The layer formed on the steel member by dipping, coating, electrolysis, and so forth is considered to be a layer in which iron phosphate, a chromate coating, and the added heavy metal are present as a mixture, although the exact composition is not known.

The thickness of the chemically treated layer is, as expressed in terms of dry weight, from 0.1 to 10 $g/m^2$ and preferably from 0.2 to 5 $g/m^2$. If the thickness is less than the lower limit, the anticorrosion properties are reduced. On the other hand, if the thickness exceeds the upper limit, the adhesion of the chemically treated layer to the coating of the powder coating composition is reduced, resulting in reduction of the impact resistance.

The present invention is described in greater detail by reference to the following examples. All parts are by weight.

EXAMPLE 1

100 Parts of a bisphenol A-type epoxy resin (epoxy equivalent: 750; ratio of the number of unreactive terminal groups to the total number of groups: 3.5:100), 110 parts of a needle-like glass powder (average length: 100 μm; average diameter: 9 μm; aspect ratio: 11:1) which had been subjected to surface treatment using N-phenyl-γ-aminopropyltrimethoxysilane, 50 parts of granular titanium dioxide which had been subjected to Zn-Al-Si treatment (average particle diameter: 0.35 μm) and 1.0 part of N-phenyl-γ-aminopropyltrimethoxysilane were melt mixed in a planetary mixer at 130°C for 2 hours, taken out from the mixer, cooled, and then pulverized using a hammer mill.

To 270 parts of the pulverized product as obtained above were added 24 parts of a resin as hardener (hydroxy group equivalent: 250) prepared by addition reaction of 1 mole of epichlorohydrin and 2 moles of bisphenol, 1.0 part of 2-methylimidazole, 0.5 part of a pigment, and 0.5 part of a leveling agent. The composition thus prepared was melt kneaded in a twin-screw extruder.

The above-kneaded mass was pulverized to a particle size of 120 mesh or less using a hammer mill to obtain an epoxy resin powder coating composition of the present invention. The needle-like glass powder contained in the coating composition had the average length of 80 μm, the average diameter of 9.0 μm, and the aspect ratio of 8.8:1. The average particle diameter of the granular titanium dioxide was 0.35 μm.

The average length and average diameter of the needle-like glass powder, and the average particle diameter of the granular inorganic filler were measured using a microscope. In measuring the above physical values of the needle-like glass powder and granular inorganic filler in the coating composition, the coating composition was dissolved in an organic solvent, diluted, and dried and, thereafter, the values were measured using a microscope.

### EXAMPLES 2 TO 4

In each example, an epoxy resin powder coating composition of the present invention was prepared in the same manner as in Example 1 except that the amounts of the needle-like glass powder and titanium dioxide added were changed as shown in Table 1. The sizes of the needle-like glass powder and granular titanium dioxide after pulverization were substantially the same as those in Example 1 and within the ranges of the present invention.

### COMPARATIVE EXAMPLE 1

An epoxy resin powder coating composition was prepared in the same manner as in Example 1 except that N-phenyl-$\gamma$-aminopropyltrimethoxysilane was not compounded to the epoxy resin and the needle-like glass powder was not subjected to the surface treatment.

### COMPARATIVE EXAMPLE 2

An epoxy resin powder coating composition was prepared in the same manner as in Example 1 except that N-phenyl-$\gamma$-aminopropyltrimethoxysilane was not compounded to the epoxy resin.

- 22 -

COMPARATIVE EXAMPLES 3 TO 9

In each example, an epoxy resin powder coating composition was prepared in the same manner as in Example 1 except that the amounts of the needle-like glass powder and titanium dioxide added were changed as shown in Table 1.

The epoxy resin powder coating compositions prepared in Examples 1 to 4 and Comparative Examples 1 to 9 were evaluated, and the results obtained are shown in Table 1.

Impact Resistance

A hot rolled steel plate (100 mm x 100 mm x 12 mm) which had been degreased and roughened to a maximum roughness of 50 μm by shot blasting was first heated to 240°C. The epoxy resin powder coating composition was coated on the hot steel plate by electrostatic spraying and then hardened by heating at 200°C for 10 minutes to form a coating having a thickness of 0.3 to 0.4 mm. This steel plate with the coating was used as a test piece.

This test piece was mounted on a Gardner impact tester, and a tup of fixed weight (weight: 1 kg) with a steel ball (diameter: 5/8 inch) fitted to the top of a rod-shaped iron was dropped on the coating of the test piece. The maximum height at which the coating was not broken was measured. This measurement was carried out at 20°C and -30°C.

Flexibility

A coating was prepared in the same manner as in the preparation of the test piece for the measurement of the impact resistance except that a steel plate which had been subjected to release treatment was used as the hot rolled steel plate. This coating was then separated from the steel plate to obtain a film. This film was punched with No. 2 Dumbbell defined in JIS-K-7113. The dumbbell-shaped film thus obtained was subjected to a tensile testing at a tensile speed of 50 mm/min using Tensilon Model UTM-III (manufactured by Toyo Bowldwin Co., Ltd.). The rate of elongation when the film was broken was measured. This measurement was carried out at 20°C and at -30°C.

Smoothness

The appearance of the test piece prepared for the measurement of the impact resistance was visually judged.

Anticorrosion Properties

A test piece was prepared in the same manner as in the preparation of the test piece for the measurement of the impact resistance. This test piece was immersed in boiling water for 10 days. At the end of the time, the formation of blister in the coating was examined and at the same time, the volume resistivity of the coating was measured.

## Table 1

| | Amount (parts) Needle-Like Glass Powder | Titanium Dioxide | Impact Resistance (cm) 20°C | -30°C | Flexibility (%) 20°C | -30°C | Smooth-ness | Anticorrosion Properties Formation of Blister | Volume Resistivity ( ·cm) |
|---|---|---|---|---|---|---|---|---|---|
| Example 1 | 110 | 50 | 250 | 180 | 10.0 | 8.0 | Good | No | $1 \times 10^{15}$ |
| " 2 | 110 | 80 | 260 | 185 | 9.5 | 8.0 | " | " | $1 \times 10^{15}$ |
| " 3 | 160 | 40 | 280 | 210 | 9.0 | 7.5 | " | " | $1 \times 10^{15}$ |
| " 4 | 90 | 80 | 250 | 180 | 10.0 | 8.0 | " | " | $1 \times 10^{15}$ |
| Comparative Example 1 | 110 | 50 | 250 | 180 | 10.0 | 8.0 | " | Yes | $2 \times 10^{8}$ |
| " 2 | 110 | 50 | 250 | 180 | 9.5 | 8.0 | " | No | $5 \times 10^{13}$ |
| " 3 | 20 | 20 | 40 | 20 | 18.0 | 15.0 | " | " | $4 \times 10^{13}$ |
| " 4 | 120 | 0 | 90 | 80 | 5.0 | 3.0 | " | " | $5 \times 10^{13}$ |
| " 5 | 120 | 10 | 100 | 80 | 6.0 | 3.5 | " | " | $5 \times 10^{13}$ |
| " 6 | 20 | 80 | 70 | 35 | 14.0 | 12.5 | " | " | $5 \times 10^{13}$ |
| " 7 | 0 | 200 | 120 | 40 | 13.5 | 10.5 | Slightly bad | " | $7 \times 10^{13}$ |
| " 8 | 200 | 0 | 150 | 130 | 3.5 | 3.0 | Bad | " | $6 \times 10^{13}$ |
| " 9 | 220 | 200 | ←————— Coating was not formed —————→ | | | | | | |

## EXAMPLE 5

100 parts of a bisphenol A-type epoxy resin (epoxy equivalent: 850; ratio of the number of unreactive terminal groups to the total number of groups: 3.0:100), 120 parts of a needle-like glass powder (average length: 80 μm; average diameter: 9 μm; aspect ratio: 8.9:1) which had been subjected to surface treatment using γ-mercapto-propyltrimethoxysilane, 80 parts of granular barium sulfate which had been subjected to Zn-Al-Si treatment (average grain diameter: 0.25 μm) and 1.0 part of γ-mercaptopropyltrimethoxysilane were melt mixed in a planetary mixer at 130°C for 2 hours, taken out from the mixer, cooled, and then pulverized using a hammer mill.

To 300 parts of the pulverized product as obtained above were added 10 parts of diaminodiphenylmethane, 0.2 part of 2-methylimidazole, 0.5 part of a pigment, and 0.5 part of a leveling agent. The resulting composition was melt kneaded in a twin-screw extruder in the same manner as in Example 1 and then pulverized to a particle size of 120 mesh or less to obtain an epoxy resin powder coating composition of the present invention. The needle-like glass powder contained in the coating composition had the average length of 70 μm, the average diameter of 9 μm, and the aspect ratio of 7.8:1. The average particle diameter of granular barium sulfate was 0.25 μm.

- 26 -

EXAMPLE 6

An epoxy resin powder coating composition of the present invention was prepared in the same manner as in Example 5 except that the amounts of the needle-like glass powder and barium sulfate added were changed as shown in Table 2.

The sizes of the needle-like glass powder and granular barium sulfate after pulverization were substantially the same as those in Example 5 and fallen within the ranges of the present invention.

COMPARATIVE EXAMPLE 10

An epoxy resin powder coating composition was prepared in the same manner as in Example 5 except that a needle-like glass powder which had been subjected to surface treatment using γ-mercaptopropyltrimethoxysilane and having an average length of 30 μm, an average diameter of 13 μm, and an aspect ratio of 2.3:1 was used.

COMPARATIVE EXAMPLE 11

An epoxy resin powder coating composition was prepared in the same manner as in Example 5 except that barium sulfate which had been subjected to Zn-Al-Si treatment and having an average particle diameter of 3.0 μm was used.

COMPARATIVE EXAMPLE 12

An epoxy resin powder coating composition was prepared in the same manner as in Example 5 except that the amount of γ-mercaptopropyltrimethoxysilane compounded to the epoxy resin was 7.0 parts.

The characteristics of coatings prepared using the epoxy resin powder coating composition prepared in Examples 5 and 6, and Comparative Examples 10 to 12 were evaluated. The results obtained are shown in Table 2 below.

Table 2

| | Amount (parts) | | Impact Resistance (cm) | | Flexibility (%) | | Smooth-ness | Anticorrosion Properties | |
| | Needle-Like Glass Powder | Barium Sulfate | 20°C | -30°C | 20°C | -30°C | | Formation of Blister | Volume Resistivity ($\Omega \cdot cm$) |
|---|---|---|---|---|---|---|---|---|---|
| Example 5 | 120 | 80 | 260 | 180 | 9.0 | 8.0 | Good | No | $1 \times 10^{15}$ |
| " 6 | 120 | 40 | 250 | 180 | 9.5 | 8.0 | " | " | $1 \times 10^{15}$ |
| Comparative Example 10 | 120 | 80 | 150 | 60 | 10.0 | 8.0 | " | " | $1 \times 10^{15}$ |
| " 11 | 120 | 80 | 180 | 110 | 3.5 | 3.0 | Slightly bad | " | $1 \times 10^{15}$ |
| " 12 | 120 | 80 | Coating was greatly foamed and pinholes were caused. | | | | | | |

- 29 -

It can be seen from the above results that the epoxy resin powder coating composition of the present invention provides a coating exhibiting excellent impact resistance not only at room temperature but also at low temperatures, and further having good flexibility.

### EXAMPLE 7

A steel plate (150 mm x 70 mm x 3.2 mm) which had been degreased was roughened to a maximum roughness of 50 µm by shot blasting and then treated with a zinc phosphate-based solution to form 3.0 $g/m^2$ (dry basis) of a zinc phsphate-based layer made mainly of $Zn_3(PO_4)_2 \cdot 4H_2O$ and $ZnFe_2(PO_4)_2 \cdot 4H_2O$. Four steel plates with the above layer were prepared by this manner.

The epoxy resin powder coating compositions prepared in Examples 1 to 4 were each coated on the steel plate by the fluidized bed coating method under conditions of preheating temperature of 200°C, hardening temperature of 200°C, and hardening time of 15 minutes to form a 0.4 mm thick coating.

### EXAMPLE 8

The same steel plate as used in Example 7 was roughened to a maximum roughness of 80 µm, and then treated with a chromate solution composed mainly of $CrO_3$ and $SiO_2$ to form 1.5 $g/m^2$ (dry basis) of a chromium-based layer made mainly of $Cr_2O_3$ and $CrO_3$. Two steel plates with the layer were prepared by this manner.

- 30 -

The epoxy resin powder coating compositions prepared in Examples 5 and 6 were each coated on the steel plate in the same manner as in Example 7.

## EXAMPLE 9

The same steel plate as used in Example 7 was roughened to a maximum roughness of 40 μm, and then treated with a chromium/phosphoric acid solution composed mainly of $Cr^{6+}$ and phosphoric acid to form 1.0 g/m² (dry basis) of a layer made mainly of iron phosphate and chromate. Four steel plates were prepared by this manner.

The epoxy resin powder coating compositions prepared in Examples 1 to 4 were each coated on the steel plate in the same manner as in Example 7.

The coated steel plates prepared in Examples 7 to 9 were tested for the following properties. The results obtained are shown in Table 3 below.

Impact Resistance

Same as described above, with the exception that the measurement was conducted at -30°C, 20°C and 80°C.

Flexibility

A strain gauge was attached to the surface of the coated steel plate, and both ends of the coated steel plate were fixed. A semi-circular mold having various radii was pressed onto the coated steel plate in such a manner that the surface with the strain gauge was stretched.

The maximum elongation of the coating at which the coating was not broken was measured. This measurement was conducted at -30°C and 20°C.

Adhesion Force after Brine Spraying Test

The coated steel plate was subjected to a brine spraying test according to JIS-Z-2371 for 2,000 hours. At the end of time, five lines were cut in the coating in both the lengthwise and widthwise directions at 3 mm intervals with a sharp cutter so that the top of the cutter reached the steel plate, according to DIN 53151 to form 25 squares. The adhesion force was determined as to whether or not the coating was peeled off and rated as from Gt0 to Gt4.

Adhesion Force after Dipping in Brine at 80°C

The coated steel plate was dipped in a 3% aqueous NaCl solution maintained at 80°C for 1,000 hours. At the end of the time, five lines were cut in the coating in both the lengthwise and widthwise directions with a sharp cutter so that the top of the cutter reached the steel plate, according to DIN 53151 to thereby form 25 squares. The adhesion force was determined whether or not the coating was peeled apart and rated as from Gt0 to Gt4.

## Table 3

| | Surface Roughness (Maximum Roughness) (μm) | Powder Coating Composition | Chemical Treatment Type of Solution | Amount g/m² | Thickness of Epoxy Coating (mm) | Impact Resistance -30°C (cm) | 20°C (cm) | 80°C (cm) | Flexibility -30°C (%) | 20°C (%) | Adhesion Force after Brine Spraying for 2000 Hours | Adhesion Force after Dipping in Brine at 80°C |
|---|---|---|---|---|---|---|---|---|---|---|---|---|
| Example 7 | | | | | | | | | | | | |
| | 50 | Composition of Example 1 | Phosphoric acid-based | 3.0 | 0.4 | 180 | 250 | 170 | 4.0 | 5.0 | Gt0 | Gt0 |
| | 50 | Composition of Example 2 | do | 3.0 | 0.4 | 185 | 260 | 180 | 4.0 | 5.0 | Gt0 | Gt0 |
| | 50 | Composition of Example 3 | do | 3.0 | 0.4 | 210 | 280 | 200 | 4.0 | 5.0 | Gt0 | Gt0 |
| | 50 | Composition of Example 4 | do | 3.0 | 0.4 | 180 | 250 | 170 | 4.0 | 5.0 | Gt0 | Gt0 |
| Example 8 | | | | | | | | | | | | |
| | 80 | Composition of Example 5 | Chromate-based | 1.5 | 0.4 | 180 | 260 | 170 | 4.0 | 5.0 | Gt0 | Gt0 |
| | 80 | Composition of Example 6 | do | 1.5 | 0.4 | 180 | 250 | 170 | 4.0 | 5.0 | Gt0 | Gt0 |
| Example 9 | | | | | | | | | | | | |
| | 40 | Composition of Example 1 | Chromium/ phosphoric acid-based | 1.0 | 0.4 | 180 | 250 | 170 | 4.0 | 5.0 | Gt0 | Gt0 |
| | 40 | Composition of Example 2 | do | 1.0 | 0.4 | 185 | 260 | 180 | 4.0 | 5.0 | Gt0 | Gt0 |
| | 40 | Composition of Example 3 | do | 1.0 | 0.4 | 210 | 280 | 200 | 4.0 | 5.0 | Gt0 | Gt0 |
| | 40 | Composition of Example 4 | do | 1.0 | 0.4 | 180 | 250 | 170 | 4.0 | 5.0 | Gt0 | Gt0 |

- 33 -

It can be seen from the above results that the present invention provides coated steel plates exhibiting good anticorrosion properties, and having excellent impact resistance and flexibility.

CLAIMS:

1. An epoxy resin powder coating composition comprising an epoxy resin with at least a hardener, a filler and an additive compounded therewith,

characterised in that (a) the filler is a mixture of (i) from 30 to 180 parts by weight per 100 parts by weight of the epoxy resin of a needle-like glass powder having an average length of at least 40 μm and an aspect ratio of length to diameter of at least 4:1 and (ii) at least 30 parts by weight per 100 parts by weight of the epoxy resin of a granular inorganic filler having an average particle diameter of 1.0 μm or less, and (b) the additive is 0.1 to 5.0 parts by weight per 100 parts by weight of the epoxy resin of at least one silane coupling agent which is an aminosilane, an epoxysilane and/or a mercaptosilane.

2. A powder coating composition as claimed in Claim 1, wherein the needle-like glass powder has an average length of at least 50 μm and a aspect ratio of at least 5:1.

3. A powder coating composition as claimed in Claim 2, wherein the needle-like glass powder has an average length of from 50 to 350 μm and an aspect ratio of from 5:1 to 100:1.

4. A powder coating composition as claimed in Claim 2 or 3, wherein the needle-like glass powder has an average diameter of from 1 to 30 μm.

5. A powder coating composition as claimed in any of Claims 1 to 4, wherein the amount of the needle-like glass

- 35 -

powder added is from 50 to 160 parts by weight.

6. A powder coating composition as claimed in any preceding claim, wherein the granular inorganic filler has an aspect ratio of from 2:1 or less.

7. A powder coating composition as claimed in any preceding claim, wherein the granular inorganic filler has an average particle diameter of from 0.1 to 0.7 µm.

8. A powder coating composition as claimed in any preceding claim, wherein the amount of the granular inorganic filler added is from 30 to 150 parts by weight.

9. A powder coating composition as claimed in any preceding claim, wherein the ratio of the number of unreactive terminal groups to the total number of groups is less than 5:100.

10. A powder coating composition as claimed in any preceding claim, wherein the needle-like glass powder was surface treated with an aminosilane, epoxysilane or mercaptosilane, and the granular inorganic filler is subjected to surface treatment to increase its affinity to the epoxy resin.

11. A steel member having on its surface (a) a chemically treated layer formed by treatment with a phosphate solution, a chromate solution, or a chromium/ phosphoric acid solution, and thereover (b) a coating formed by coating an epoxy resin powder composition as claimed in any preceding claim, ·and allowing the composition to harden.

12. A coated steel member as claimed in Claim 11, wherein the surface of the steel member was preliminarily treated so that its surface roughness (maximum roughness as determined by JIS B0601) is 10 to 120 µm.

13. A coated steel member as claimed in Claim 11 or 12, wherein the dry weight of the chemically treated layer is 0.1 to 10 $g/m^2$.

14. A coated steel member as claimed in Claim 11, 12 or 13, wherein the thickness of the epoxy coating is at least 0.1 mm.